# EUROPEAN PATENT SPECIFICATION

(11) **EP 2 522 495 B1**
(45) Date of publication and mention of the grant of the patent: **11.12.2013**
(21) Application number: 12167449.3
(22) Date of filing: 10.05.2012
(51) Int. Cl.: B29C 70/28, B32B 3/02

(54) **Structural member with flange having a clean cut edge, and process for the manufacture thereof**
Bauteil mit einem einen glatten Rand aufweisenden Flansch, sowie Verfahren zu seiner Herstellung
Pièce avec rebord présentant une découpe nette, ainsi que son procédé de fabrication

(30) Priority: 12.05.2011 IT TO20110421
(43) Date of publication of application: 14.11.2012
(73) Proprietor: Alenia Aermacchi S.p.A., 21040 Venegono Superiore (Varese) (IT)
(72) Inventor: Raffone, Marco, I-80121 NAPOLI (IT); Iagulli, Gianni, I-71016 SAN SEVERO (Foggia) (IT); Delli Carri, Alfonso, I-71100 FOGGIA (IT); Grosso, Felice, I-71100 FOGGIA (IT); Ciavarella, Leonardo, I-71017 TORREMAGGIORE (Foggia) (IT); Di Giacomo, Eugenio, I-84025 EBOLI (Salerno) (IT); Ambrosino, Giuseppe, I-71026 DELICETO (Foggia) (IT)
(74) Representative: Vanzini, Christian

(56) References cited:
- WO-A1-2009/118695

## Description

The present invention relates to a structural member composed of assembled plies of fibre material embedded in a resin matrix, and comprising at least one laminated part formed by a plurality of said plies arranged in a stacking relationship, wherein said laminated part of the structural member is folded in such a way as to form a flange defining an inner angle with respect to a base portion of the laminated part.

Members of the aforesaid type are used, in particular, in the aeronautical industry, as stiffening members, known as stringers, for structural panels of composite material.

Conventionally, the manufacture of these members requires a hot forming process, for creating the flanges which these members are required to have, and a curing process for consolidating the member made of composite material.

The forming process causes the plies of the laminate to slide with respect to each other, thereby creating an undesirable stepped edge of the flange of the structural member. This stepped edge is usually removed by a trimming operation performed after the curing of the part, to create an edge which is cut perpendicularly to the faces of the flange. Alternatively, the plies are arranged so as to compensate for the sliding effect, thereby providing a substantially perpendicular edge at the end of the forming phase, without the need for trimming the part.

A flange edge of this type requires complicated processing for its production, and also gives rise to problems if the structural member is assembled together with a component of composite material, typically a panel to be stiffened, by a process known as "co-bonding". In this process, previously consolidated structural members (usually stringers) are bonded to another laminated, but uncured, member, by the interposition of a layer of structural adhesive, and the assembly is subjected to a curing cycle in an autoclave at high temperature and pressure.

During this process, the flange of the structural member disadvantageously tends to sink into the unconsolidated material of the panel, causing distortions of the fibres and of the individual plies, particularly at the edge of the flange, which are structurally unacceptable.

One object of the present invention is therefore to provide a structural member which can at least partially overcome the aforesaid drawbacks, and which can be manufactured in a less technologically complex and costly way than the known solutions.

This object is achieved according to the invention with a structural member of the type defined initially, wherein
the edge of said flange forms a sloped surface on the concave side of the laminated part, at which sloped surface the plies of the flange which are closer to the concave side of the laminated part are folded towards the ply of the flange positioned on the convex side of the laminated part.

According to this proposed solution, the edge of the flange does not require a trimming operation, because it is provided with a smooth sloped surface without any stepping. The costs and consumption of material in the process of manufacturing the structural member are thus reduced, and the time required for the manufacture of the finished product is also reduced.

Furthermore, the inventors have discovered that the inclined edge of the flange reduces the defects arising from the co-bonding process, because it allows better adaptation of the materials forming the curing bag, and therefore better compacting of the laminated panels at the interface with the edge of the flange of the structural member.

Preferred embodiments of the invention are defined in the dependent claims, which are to be considered as an integral part of the present description.

The invention also proposes a method for manufacturing a structural member composed of assembled plies of fibre material embedded in a resin matrix, and comprising at least one laminated part formed by a plurality of said plies arranged in a stacking relationship, wherein the method comprises the following steps:
placing said laminated part in a planar configuration;
trimming said laminated part along its perimeter with the blade of a cutter placed in a direction perpendicular to said laminated part, in such a way as to cause its width to be equal to that of the surface development of the folded part to be produced; and
subjecting said laminated part to forming on a mandrel so that said laminated part of the structural member is folded in such a way as to form a flange defining an inner angle with respect to a base portion of the laminated part;
wherein said mandrel has a sloped forming surface for forming a complementary sloped surface on the edge of the flange on the concave side of the laminated part, in such a way that by means of the sloped forming surface the plies of the flange which are closer to the concave side of the laminated part are folded towards the ply of the flange on the convex side of the laminated part.

Further characteristics and advantages of the structural member according to the invention will be made clearer by the following detailed description of an embodiment of the invention, given with reference to the attached drawings which are provided purely as nonlimiting illustrations, in which:
- Figure 1 is a schematic cross-sectional view of a structural member according to the invention;
- Figure 2 is a schematic illustration of a stage in the production of the member of Figure 1; and
- Figure 3 is an enlarged photograph of an edge of the flange of a structural member according to the invention.

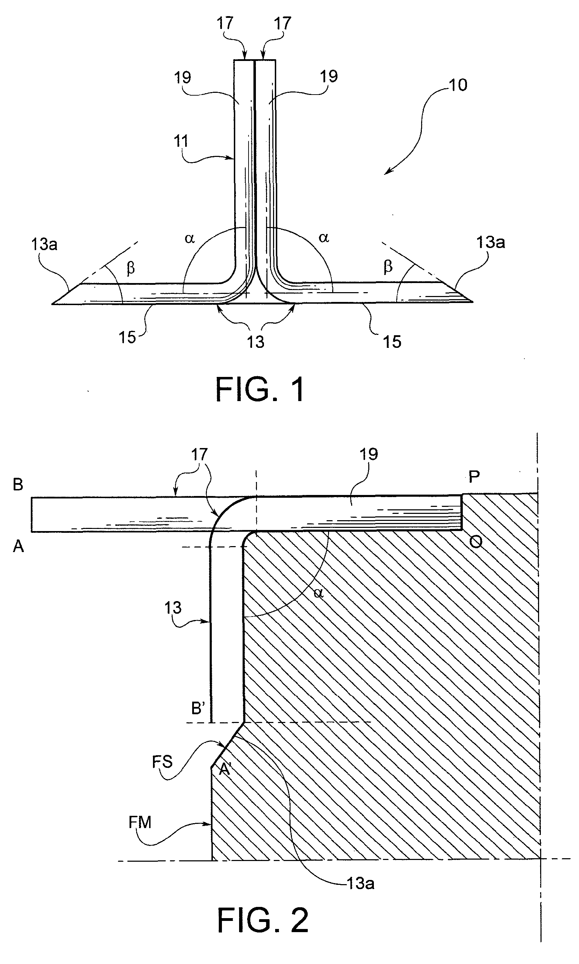

With reference to Figures 1 and 2, the number 10 indicates a structural member according to the invention.

Figure 1 shows a cross section of this member, which is composed, in particular, of a linear member having a straight or curved axis of extension perpendicular to the plane of the drawing. The structural member 10 is composed of a series of assembled plies of fibre material embedded in a resin matrix.

In the illustrated example, the member is a T-section stiffening stringer for a panel. This stringer is entirely composed of a web 11 and a pair of flanges 13 projecting perpendicularly from opposite sides of the web 11, at one end of the latter. The flanges 13 are designed for fixing the stringer to a panel (not shown), particularly by a co-bonding method. The fixing of the stringer to the external component takes place on the respective outer faces 15 of the flanges 13.

The structural member 10 comprises at least one laminated part 17 formed by a plurality of plies of fibre material embedded in a resin matrix, these plies being arranged in a stacking relationship.

The plies of composite material are, in particular, plies of preimpregnated material. For the purposes of the invention, the term "preimpregnated material" denotes in a conventional way a semi-finished product comprising reinforcing fibres (usually of carbon or glass) and a resin matrix in which these fibres are embedded. The fibres can be arranged in different configurations, for example in a unidirectional layer with the fibres aligned and parallel to each other along a single direction, or in the form of a "textile" in which the fibres are interwoven in two perpendicular directions, called the woof and warp. Preimpregnated materials are generally prepared in tape form and wound in reels.

Therefore, the preimpregnated material is cut in advance to the requisite shape and size for the production of the laminated part 17.

The laminated part 17 of the structural member 10 is folded in such a way as to form a flange 13 defining an inner angle α with respect to a base portion 19 of the laminated part 17. In particular, the laminated part 17 is folded about a bending axis parallel to the direction of extension of the structural member 10. Consequently, the laminated part 17 can be seen to have a concave side (or inner side), where the flange 13 and the base portion 19 form between them an inner angle of α < 180°, in particular an angle of approximately 90°, and a convex side (or outer side), where the flange 13 and the base portion 19 form between them the 360° complement of the inner angle α, equal to 360° - α.

In the illustrated example, the structural member or stringer is formed by two laminated portions 17 folded and joined to each other by means of their respective base parts 19, which combine to form the web 11 of the stringer. The respective flanges of the laminated portions form the flanges of the stringer. The inner angle α formed by each flange relative to the respective base portion is substantially equal to a right angle.

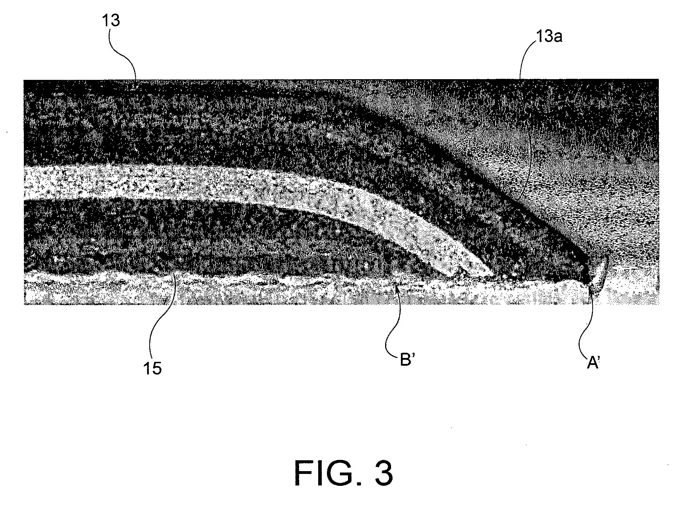

Each flange 13 has an edge 13a which forms a sloped surface on the side of the flange 13 facing the inner angle α, in other words on the concave side of the respective laminated portion 17. At this sloped surface, the plies of the flange 13 which are closer to the inner angle α, in other words the plies which are closer to the concave side of the laminated portion, are folded towards the ply of the flange 13 which is farthest from the inner angle α, in other words on the convex side of the laminated portion, as shown in Figure 3. In this way the ends of the plies of the flange 13 are substantially level with the face 15 of the flange 13 facing away from the inner angle α, in other words the outer face on the convex side of the laminated portion. In particular, the ply of the flange 13 closest to the concave side of the laminated part 17 is folded in such a way as to entirely cover the edges of all the other plies, when viewed in a direction parallel to the flange 13. In co-bonded structures, this arrangement has been shown to enhance the mechanical properties, as compared with a case in which the edges of the individual plies are exposed.

With reference to Figure 2, the aforesaid sloped surface edge can be produced by the method described below.

In a method for manufacturing the structural member 10, the laminated parts 17 are initially formed in a planar configuration, by superimposing successive plies of composite material on a lamination table (not shown) using known procedures per se, and trimming the perimeter of the flat laminated part with the aid of a numerically controlled machine, with the cutter blade placed in a direction orthogonal to the part, in such a way that the flat laminated part has a width equal to the plane development of the folded part to be formed.

The laminated parts 17 are then subjected to a hot forming process, wherein each laminated part 17 is placed on a forming mandrel FM, shown in Figure 2. In a conventional way, the laminated part 17 is deformed (folded) by applying heat to the laminated part and pressing this part against the mandrel FM (by means of a forming bag or other similar device), the part adapting to the profile of the forming mandrel, which in the illustrated example is composed of two faces perpendicular to each other and connected together by a rounded corner.

As shown in Figure 2, the mandrel FM is provided with a sloped forming surface FS capable of forming a complementary sloped surface on the edge 13a of the flange 13. In the illustrated example, the sloped forming surface FS is a surface which is adjacent to one of the forming faces of the mandrel FM and is inclined with respect thereto.

Figure 2 shows schematically the laminated part 17 in a planar configuration, before it is folded in the forming process. This laminated part 17 is also shown in a folded configuration after the forming process, by means of its terminal plies. The line OA of the laminated part 17 in the planar configuration represents the innermost ply of the part, in other words the ply which in the final folded condition is located on the concave side of the laminated part 17, that is to say directly facing the portion of space defined by the inner angle α. The line PB represents the outermost ply of the laminated part 17, in other words the ply which in the final folded condition is located on the convex side of the laminated part 17, that is to say facing away from the portion of space defined by the inner angle α.

The lines OA' and PB' represent, respectively, the innermost ply and the outermost ply of the laminated part at the end of the forming process. As a result of the relative sliding of the plies of composite material during the forming process, and the finished thickness of these plies, the free ends A' and B' of the plies do not move rigidly with each other, but undergo a movement by which their distance from each other is varied (however, the other ends O and P remain fixed to the mandrel).

According to the invention, the end A' of the innermost layer is forced, by the sloped forming surface FS formed on the mandrel FM, to slide towards the convex side of the laminated part, thus causing an edge portion of the ply OA' to be folded towards the ply PB'. A similar phenomenon takes place in the intermediate plies, the extension of the folded edge portion being progressively reduced with the distance of each intermediate ply concerned from the ply PB'. Because of the action of the forming bag (or similar device) and the suitable design and positioning of the sloped forming surface FS, the ply PB' does not undergo any appreciable deformation at its edge. Thus by making use of the unavoidable relative sliding of the plies an inclined edge is formed, at which the thickness of the flange 13 decreases in the distal direction.

In the process of manufacturing the structural member, the laminated part whose edge is produced by the method described above can be combined with other parts made of composite material to form the final structural member, by being combined, for example, with another identical part, as in the case of the stringer shown in the example of Figure 1.

If the resin of the laminated part is a thermosetting resin, the structural member, and consequently the angled edge of the flange, is consolidated by a conventional process of autoclave curing.

If the resin of the laminated part is a thermoplastic resin, the edge of the flange of the laminated part can be consolidated simply by cooling the laminated part after forming.

Because the sloped surface of the edge is formed by a portion of the ply OA', there is no undesirable stepping on the edge of the flange.

The inventors have also discovered that the presence of an angled edge reduces the deformation caused in a panel of composite material to which the structural member is applied, when this application takes place by a co-bonding procedure.

The angle of inclination of the sloped surface on the edge such that the ply OA' can cover the whole sloped surface depends on the thickness and the number of plies of the composite material (and also on the angle α).

However, the inventors have found that, in the ply configurations usually used in the aeronautical industry for laminated parts folded into an L-shape, when the sloped surface of the edge of the flange forms an angle β with respect to the face of the flange on the convex side of the laminated part such that 30° < β < 40°, and, in particular, β ≈ 32°, an angled edge is obtained in which the ply OA' has a folded edge portion having an extension such that the end A' is in the proximity of the outer corner of the sloped forming surface FS of the mandrel.

The selection of the value of the angle β ensures a simultaneous satisfactory adaptation of the component materials of the vacuum bag during the curing cycle, thus reducing the number of defects in the panel at the interface with the edge of the flange of the structural member which typically occur in the co-bonding process (in which the stringer is pre-consolidated and the panel is unconsolidated).

## Claims

1. A structural member (10) composed of assembled plies of fiber material embedded in a resin matrix, and comprising at least one laminated part (17) formed by a plurality of said plies arranged in a stacking relationship, wherein said laminated part of the structural member (10) is folded in such a way as to form a flange (13) defining an inner angle (α) with respect to a base portion (19) of the laminated part (17),
**characterized in that** the edge (13a) of said flange forms a sloped surface on the concave side of the laminated part (13), at which sloped surface the plies of the flange (13) which are closer to the concave side of the laminated part (17) are folded toward the ply of the flange (13) arranged on the convex side of the laminated part (17).

2. A structural member according to claim 1, wherein the plies of the flange (13) which are closer to the concave side of the laminated part (17) are folded in such a way as to cause their ends to be substantially level with the face (15) of the flange (13) on the convex side of the laminated part (17).

3. A structural member according to claim 1 or 2, wherein the ply of the flange (13) closest to the concave side of the laminated part (17) is folded in such a way as to entirely cover the edges of all other plies, when viewed in a direction parallel to the flange (13).

4. A structural member according to any of claims 1 to 3, wherein said inner angle is substantially a right angle, and said sloped surface defines an angle β with respect to the face (15) of the flange (13) on the convex side of the laminated part (17), such as 30° < β < 40°.

5. A structural member according to any of the preceding claims, wherein said structural member is a linear member and said laminated part is folded about a folding axis parallel to the extension direction of said linear member.

6. A method for manufacturing a structural member (10) composed of assembled plies of fiber material embedded in a resin matrix, and comprising at least one laminated part (17) formed by a plurality of said plies arranged in a stacking relationship, wherein the method comprises the following steps:
providing said laminated part in a planar configuration;
trimming said laminated part along its perimeter with the blade of a cutter arranged in a direction perpendicular to said laminated part, in such a way as to cause its width to be equal to that of the surface development of the folded part to be produced; and
subjecting said laminated part to forming on a mandrel (FM) so that said laminated part of the structural member (10) is folded in such a way as to form a flange (13) defining an inner angle (α) with respect to a base portion (19) of the laminated part (17);
**characterized in that**
said mandrel has a sloped forming surface (FS) for forming a correspondingly sloped surface on the edge (13a) of the flange (13) on the concave side of the laminated part (17), in such a way as that by means of the sloped forming surface the plies of the flange (13) which are closer to the concave side of the laminated part (17) are folded toward the ply of the flange (13) arranged on the convex side of the laminated part (17).

7. A method according to claim 6, wherein the plies of the flange (13) which are closer to the concave side of the laminated part (17) are folded in such a way as to cause their ends to be substantially level with the face (15) of the flange (13) on the convex side of the laminated part (17).

8. A method according to claim 6 or 7, wherein the ply of the flange (13) closest to the concave side of the laminated part (17) is folded in such a way as to entirely cover the edges of all other plies, when viewed in a direction parallel to the flange (13).

9. A method according to any of claims 6 to 8, wherein said inner angle is substantially a right angle, and said sloped surface defines an angle β with respect to the face (15) of the flange (13) on the convex side of the laminated part (17), such as 30° < β < 40°.

10. A method according to any of claims 6 to 9, wherein said structural member is a linear member and said laminated part is folded about a folding axis parallel to the extension direction of said linear member.

## Patentansprüche

1. Strukturbauteil (10) gebildet aus zusammengesetzten Lagen eines in eine Kunstharzmatrix eingebetteten Fasermaterials, und beinhaltend zumindest einen laminierten Teil (17), der von einer Vielzahl der Faserlagen gebildet wird, die in einer stapelartigen Beziehung zueinander angeordnet sind, wobei der laminierte Teil des Strukturbauteils (10) in einer Weise gefaltet ist, dass er einen Flansch (13) ausbildet, der einen inneren Winkel (α) in Bezug auf einen Basisabschnitt (19) des laminierten Teils (17) definiert,
**dadurch gekennzeichnet, dass** die Kante (13a) des Flansches eine geneigte Oberfläche auf der konkaven Seite des laminierten Teils (13) ausbildet, wobei bei dieser geneigten Oberfläche die Lagen des Flansches (13), die näher zur konkaven Seite des laminierten Teils (17) angeordnet sind, in Richtung der auf der konvexen Seite des laminierten Teils (17) angeordneten Lage des Flansches (13) gefaltet werden.

2. Strukturbauteil nach Anspruch 1, wobei die Lagen des Flansches (13), die der konkaven Seite des laminierten Teils (17) näher sind, in einer derartigen Weise gefaltet werden, dass deren Enden im Wesentlichen auf eine Höhe mit der Stirnseite (15) des Flansches (13) auf der konvexen Seite des laminierten Teils (17) gebracht sind.

3. Strukturbauteil nach Anspruch 1 oder 2, wobei die Lage des Flansches (13), die der konkaven Seite des laminierten Teils (17) am nächsten ist, in einer derartigen Weise gefaltet ist, dass die Ecken aller anderen Lagen im Wesentlichen bedeckt sind, wenn sie in einer Richtung parallel zum Flansch (13) betrachtet werden.

4. Strukturbauteil nach einem der Ansprüche 1 bis 3, wobei der innere Winkel im Wesentlichen ein rechter Winkel ist, und die geneigte Oberfläche einen Winkel β in Bezug auf die Stirnseite (15) des Flansches (13) auf der konvexen Seite des laminierten Teils (17) definiert, so dass 30° < β < 40° ist.

5. Strukturbauteil nach einem der vorhergehenden Ansprüche, wobei das Strukturbauteil ein lineares Bauteil ist und der laminierte Teil an einer Faltachse parallel zur Erstreckungsrichtung des linearen Bauteils gefaltet ist.

6. Verfahren zur Fertigung eines Strukturbauteils (10) gebildet aus zusammengesetzten Lagen in einer Kunstharzmatrix eingebetteten Fasermaterials, und beinhaltend zumindest einen laminierten Teil (17), der durch eine Vielzahl der Lagen gebildet wird, die in einer stapelartigen Beziehung zueinander angeordnet sind, wobei das Verfahren die folgenden Schritte beinhaltet:
- Bereitstellen des laminierten Teils in einer planaren Konfiguration;
- Zuschneiden des laminierten Teils entlang seines Perimeters mit der Klinge eines Messers, das in einer zu dem laminierten Teil rechtwinkligen Richtung angeordnet ist, in einer derartigen Weise, dass dessen Breite derjenigen der Oberflächenentwicklung des zu produzierenden gefalteten Teils angeglichen wird; und
- Unterziehen des laminierten Teils einer Formung auf einer Spindel (FM), so dass der laminierte Teil des Strukturbauteils (10) in einer derartigen Weise gefaltet wird, dass ein Flansch (13) ausgeformt wird, der einen inneren Winkel (α) in Bezug auf einen Basisabschnitt (19) des laminaren Teils (17) definiert;
**dadurch gekennzeichnet, dass**
die Spindel eine geneigte Oberfläche (FS) aufweist, um eine entsprechend geneigte Oberfläche der Kante (13a) des Flansches (13) auf der konkaven Seite des laminierten Teils (17) auszuformen, in einer derartigen Weise, dass mit Hilfe der geneigten Formungsoberfläche die Lagen des Flansches (13), die der konkaven Seite des laminierten Teils (17) näher sind, in Richtung der Lage des Flansches (13) zugefaltet werden, die auf der konvexen Seite des laminierten Teils (17) angeordnet wird.

7. Verfahren nach Anspruch 6, wobei die Lagen des Flansches (13), die der konkaven Seite des laminierten Teils (17) näher sind, in einer derartigen Weise gefaltet werden, dass deren Enden im Wesentlichen auf eine Höhe mit der Stirnseiten (15) des Flansches (13) auf der konvexen Seite des laminierten Teils (17) gebracht werden.

8. Verfahren nach Anspruch 6 oder 7, wobei die Lage des Flansches (13), die der konkaven Seite des laminierten Teils (17) am nächsten ist, in einer derartigen Weise gefaltet wird, dass die Ecken aller anderen Lagen vollständig überdeckt werden, wenn sie aus einer parallelen Richtung zum Flansch (13) betrachtet werden.

9. Verfahren nach einem der Ansprüche 6 bis 8, wobei der innere Winkel im Wesentlichen ein rechter Winkel ist, und die geneigte Oberfläche einen Winkel β in Bezug auf die Stirnseite (15) des Flansches (13) auf der konvexen Seite des laminierten Teils (17) definiert, so dass 30° < β < 40° ist.

10. Verfahren nach einem der Ansprüche 6 bis 9, wobei das Strukturbauteil ein lineares Bauteil ist und der laminierte Teil um eine Faltachse parallel zur Erstreckungsrichtung des linearen Bauteils gefaltet wird.

## Revendications

1. Elément de structure (10) composé de couches assemblées d'un matériau à base de fibres noyé dans une matrice en résine, et comprenant au moins une partie stratifiée (17) formée par une pluralité desdites couches disposées en empilement, dans lequel ladite partie stratifiée de l'élément de structure (10) est pliée de manière à former un rebord (13) définissant un angle intérieur (α) par rapport à une partie de base (19) de la partie stratifiée (17),
**caractérisé en ce que** le bord (13a) dudit rebord forme une surface inclinée du côté concave de la partie stratifiée (13), au niveau de laquelle les couches du rebord (13) qui sont proches du côté concave de la partie stratifiée (17) sont pliées vers la couche du rebord (13) située du côté convexe de la partie stratifiée (17).

2. Elément de structure selon la revendication 1, dans lequel les couches du rebord (13) qui sont proches du côté concave de la partie stratifiée (17) sont pliées de façon à ce que leurs extrémités soient substantiellement de niveau avec la face (15) du rebord (13) située du côté convexe de la partie stratifiée (17).

3. Elément de structure selon la revendication 1 ou 2, dans lequel la couche du rebord (13) la plus proche du côté concave de la partie stratifiée (17) est pliée de manière à couvrir entièrement les bords de toutes les autres couches, vues dans une direction parallèle au rebord (13).

4. Elément de structure selon l'une quelconque des revendications 1 à 3, dans lequel ledit angle intérieur est substantiellement un angle droit, et ladite surface inclinée définit un angle β par rapport à la face (15) du rebord (13) du côté convexe de la partie stratifiée (17), tel que 30° < β < 40°.

5. Elément de structure selon l'une quelconque des revendications précédentes, dans lequel ledit élément de structure est un élément linéaire et ladite partie stratifiée est pliée autour d'un axe de pliage parallèle à la direction d'extension dudit élément linéaire.

6. Procédé de fabrication d'un élément de structure (10) composé de couches assemblées d'un matériau à base de fibres noyé dans une matrice en résine, et comprenant au moins une partie stratifiée (17) formée par une pluralité desdites couches disposées en empilement, dans lequel le procédé comprend les étapes suivantes :
fournir ladite partie stratifiée dans une configuration plane ;
couper ladite partie stratifiée le long de son périmètre avec la lame d'un couteau disposée dans une direction perpendiculaire à ladite partie stratifiée, de manière à rendre sa largeur égale à celle du développement de surface de la partie pliée à produire ; et
soumettre ladite partie stratifiée à une mise en forme sur un mandrin (FM) de telle manière que ladite partie stratifiée de l'élément de structure (10) est pliée de façon à former un rebord (13) définissant un angle intérieur (α) par rapport à une partie de base (19) de la partie stratifiée (17) ;
**caractérisé en ce que**
ledit mandrin a une surface de mise en forme inclinée (FS) pour former une surface inclinée de façon correspondante sur le bord (13a) du rebord (13) du côté concave de la partie stratifiée (17), de telle manière que grâce à la surface de mise en forme inclinée, les couches du rebord (13) qui sont proches du côté concave de la partie stratifiée (17) sont pliées vers la couche du rebord (13) située du côté convexe de la partie stratifiée (17).

7. Procédé selon la revendication 6, dans lequel les couches du rebord (13) qui sont proches du côté concave de la partie stratifiée (17) sont pliées de façon à ce que leurs extrémités soient substantiellement de niveau avec la face (15) du rebord (13) située du côté convexe de la partie stratifiée (17).

8. Procédé selon la revendication 6 ou 7, dans lequel la couche du rebord (13) la plus proche du côté concave de la partie stratifiée (17) est pliée de manière à couvrir entièrement les bords de toutes les autres couches, vues dans une direction parallèle au rebord (13).

9. Procédé selon l'une quelconque des revendications 6 à 8, dans lequel ledit angle intérieur est substantiellement un angle droit, et ladite surface inclinée définit un angle β par rapport à la face (15) du rebord (13) du côté convexe de la partie stratifiée (17), tel que 30° < β < 40°.

10. Procédé selon l'une quelconque des revendications 6 à 9, dans lequel ledit élément de structure est un élément linéaire et ladite partie stratifiée est pliée autour d'un axe de pliage parallèle à la direction d'extension dudit élément linéaire.
